(19) Europäisches Patentamt / European Patent Office / Office européen des brevets

(11) **EP 3 282 224 A1**

(12) **EUROPEAN PATENT APPLICATION**

(43) Date of publication:
**14.02.2018 Bulletin 2018/07**

(51) Int Cl.:
**G01B 11/30** (2006.01)   **G01B 9/04** (2006.01)
**G01B 11/24** (2006.01)   **G01N 13/02** (2006.01)

(21) Application number: **16001763.8**

(22) Date of filing: **09.08.2016**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Simulacions Optiques S.L.**
**08221 Terrassa (Barcelona) (ES)**

(72) Inventors:
• **Pizarro Bondia, Carles**
**08221 Terrassa (Barcelona) (ES)**
• **Arasa Martí, Josep**
**08222 Terrassa (Barcelona) (ES)**
• **Garcia Favrot, Cristina**
**08221 Terrassa (Barcelona) (ES)**
• **Domínguez Álvarez, Noemi**
**08221 Terrassa (Barcelona) (ES)**

(74) Representative: **Curell Suñol S.L.P.**
**Via Augusta 21**
**08006 Barcelona (ES)**

(54) **METHOD FOR MEASURING THE TOPOGRAPHY AND SURFACE ENERGY OF A SURFACE OF A SOLID SAMPLE BY CONFOCAL MICROSCOPE AND DEVICE FOR CARRYING IT OUT**

(57)   Method for measuring the topography and surface energy of a surface of a solid sample (101), comprising the steps consisting of:
a) positioning the sample (101) on a sample-holder stage (102) of a confocal device (103);
b) determining a measurement area (204) in the sample (101);
c) determining the topography of the measurement area (204) by means of confocal microscopy;
d) placing a drop (301) in the measurement area (204);
e) determining the contact angle $\vartheta$ of the drop (301);
f) determining the coordinates of the edges of the contact surface between the drop (301) and the sample (101);
g) selecting from the subset of the topography corresponding to the edges of the contact surface between the drop (301) and the sample (101);
h) determining the surface energy of the solid ($\gamma_s$), based on the topographical data of the subset and the contact angle of the drop (301).

FIG. 1

EP 3 282 224 A1

## Description

## Field of the invention

The invention relates to a method for the dual measurement of topography and surface energy in a solid surface with any sort of roughness, by measuring the local topography of the sample and measuring the contact angle, both measurements being taken by means of a confocal microscope, in the same area of the surface of the sample, ensuring that it is the same area by referencing both measurements in a single external coordinate system. The invention also relates to a device enabling said method described above to be applied.

## Background of the invention

Currently, the surface energy of a solid is usually obtained based on the contact angle, applying calculation models based on Young's equation.

$$\gamma_{sl} = \gamma_s - \gamma_l \cdot cos\theta$$

Where $\gamma_{al}$ is the solid-liquid interface energy, $\gamma_s$ is the surface energy of the solid, $\gamma_l$ is the surface tension of the liquid, and $\theta$ is the value of the contact angle measured for a totally flat and smooth surface [1].

In particular, the application of optical methods and devices based on lateral viewing of drops placed on surfaces for the determination of the contact angle is known, for example as described in EP2899528, US4688938, US5137352, US6867854 or US5861946.

US5080484 describes a device and a method for accurately determining the contact angle using beams that form an oblique angle with the contact surface.

WO2014194235 describes methods of obtaining the shape of a drop of liquid based on measuring different shape parameters of the drop, including contact angle, with different methods: vertically, optically, by means of a confocal microscope, through an interferometric pattern of the drop.

The article *Contact angle measurements by confocal microscopy for non-destructive microscale surface characterization,* by Sundberg, Mansson and Tagerud, describes interferometry methods for determining the contact angle.

Patents JP2005337781 and PL406322 describe methods and apparatuses for mathematically obtaining the surface energy of a solid based on the contact angle between the solid and the liquid.

However, as mentioned above, said equation can only describe solid surfaces that are totally flat and smooth [1]. Using it on rough surfaces leads to an erroneous assessment of the surface energy when the topography is not taken into account, since the contact angle is related both to the surface energy and to the topography of the surface.

In particular, current techniques can only be applied to assess the global hydrophobicity of the surface, but cannot be used to determine the intrinsic surface energy [2]. The greater the roughness of the surface, the more erroneous it is to associate the measured contact angle only with the surface energy and the chemical properties of the surface.

This is mainly due to the fact that, the greater the roughness, the greater the contact area between the liquid and the solid, and the greater the effect of the trapped air bubbles, factors which can only be suitably accounted for when the local microstructure is known [3].

In order to resolve this, calculation methods have been developed that model this influence of the topography on the resulting contact angle.

In order to be able to use these calculation methods correctly in real samples (as opposed to samples specifically prepared with a determined topography via etching or other such processes), one must know with the utmost accuracy both the contact angle and the topography of the sample in the exact area of the sample where the drop has been placed. In this sense, it is necessary to develop measurement equipment that enables the topography of the surface and the contact angle to be measured in the same area of the sample. Reference [6] describes a system combining both types of measurements. On the one hand, the measurement of the topography by means of interferometry, and on the other, of the contact angle by means of lateral viewing of the drop. The reason why both measurements are not made using interferometry is that interferometric techniques do not allow data to be obtained on a broad enough area of the drop to properly assess the contact angle. The mechanical and optical changes that would need to be made to a device in order for it to reach the minimum requirements for obtaining a reliable measurement of the drop -among others, increasing the numerical aperture - would result in a very large-sized device that might be useful in a laboratory setting, but not in a more commercial sphere.

Likewise, liquid dispensing systems are known which enable the liquid to be placed in drop form on the measurement area. These may be pipettes (manual or automatic), tubes, syringes or droppers.

CA 2923340 A1 (WO 2015/036397 A1) describes a sampling pipette that incorporates an improved system for adjusting and showing the volume that it can dispense by means of a system of volume references.

EP 2982438 A1 (WO 2014/184865) describes a manual pipette that includes an electric liquid sucking and discharging mechanism. US 2016/0082430 A1 describes a similar device.

US 9296603 B1 describes a liquid dispenser that includes a liquid reservoir electronically connected to a valve that controls the aperture time thereof, and thereby controls the amount of liquid to be dispensed.

US 2016/0075499 describes a cylindrical liquid dispenser based on the workings of a syringe, and which contains a tank of liquid that, through the action of a piston, dispenses a quantity of liquid through a dispensing point.

US 2016/0138953 A1 describes a liquid dispensing system connected to a metering head.

WO 2016/072673 A1 describes a system for placing liquids that comprises a liquid tank that is external to the drop dispenser which carries out the function of a "dropper".

US201613663 and US2016136361 describe syringe-type devices.

Lastly, there are known microscopy devices provided with objective turrets which are in turn provided with means for placing drops on samples, for example as in DE1472289A1.

**Description of the invention**

In order to overcome the drawbacks of the state of the art, the present invention proposes a method for measuring the topography and surface energy of a surface of a solid sample, comprising the steps consisting of:

a) positioning the sample on a sample-holder stage of a confocal device;
b) determining a measurement area in the sample;
c) determining the topography of the measurement area by means of confocal microscopy;
d) placing a drop in the measurement area;
e) determining the contact angle $\vartheta$ of the drop;
f) determining the coordinates of the edges of the contact surface between the drop and the sample;
g) selecting from the subset of the topography corresponding to the area comprised within the edges of the contact surface between the drop and the sample;
h) determining the surface energy of the solid, based on the topographical data of the subset and the contact angle of the drop.

In some embodiments, a common reference system is used for the topography of the measurement area and for the determination of the coordinates of the edges of the contact surface between the drop and the sample.

In some embodiments, the sample is put in an area of the sample-holder stage provided with reference points or axes, wherein the coordinates of a point of the measurement area are determined by using said reference points or axes, such that for the topography of the measurement area and for the determination of the coordinates of the edges of the contact surface between the drop and the sample, the reference defined by the determined point and the reference points or axes is used.

In some embodiments, in order to carry out step e) the maximum height of the drop, the apparent diameter of the drop and/or the coordinates of a series of points on the surface of the drop are measured.

In some embodiments, step h) is determined using a Wenzel model or a Cassie-Baxter model.

In some embodiments, step g) includes the measurement of the Wenzel roughness factor, the total solid surface, the projected solid surface and/or the fraction of the solid surface.

En some embodiments, the drop placed in step d) has a known volume.

In some embodiments, steps c), d) and f) are carried out with objective lenses and a liquid dispenser, for example a pipette, arranged on a common rotary drum.

In some embodiments, the method comprises, between steps c) and d), a step of detecting the presence of incrustations of biological origin in the sample.

In some embodiments, the step of detecting is carried out by fluorescence.

In some embodiments, the sample is illuminated with light whose wavelength is within the interval that goes from 300 to 450 nm and wherein the light coming from the sample is filtered with a bandpass filter whose transmission is comprised within the interval from 600 to 750 nm.

The invention also relates to a confocal device for carrying out a method for measuring the topography and contact angle of a solid sample for the purpose of calculating the surface energy, comprising:

a) an image acquisition system enabling the capture of images of the surface of the sample through the objective lens(es) of the microscope;
b) a sample-holder stage provided with at least one reference point marked by any means, in order to be able to establish an external coordinate system to which all the measurements can be referenced;
c) a system allowing the relative position between the sample and the confocal microscope to be changed;
d) any system enabling the external reference and a specific point of the measurement area to be located simultaneously, in order to be able to calculate the coordinates of said specific point of the measurement area in the external coordinate system.

Preferably, the device comprises means for placing a drop with a controlled volume and/or means for measuring the volume of the placed drop.

Advantageously, the measuring device which is the subject matter of the present invention may include the following parts in order to assess the presence of incrustations of biological origin in the sample:

e) a light source with emissions in the wavelength range of 300-450 nm, to illuminate the sample;
f) a bandpass filter with transmissions included in the range of 600-750 nm, positioned at any point of the optical path that goes from the sample to the image acquisition system, and which filters the light, eliminating all contributions that do not come from the fluorescence of the incrustations of biological origin in the sample.

Lastly, the device comprises means for moving the sample-holder.

## Brief description of the drawings

As a complement to the description, and for the purpose of helping to make the characteristics of the invention more readily understandable, in accordance with a practical embodiment thereof, said description is accompanied by a set of figures constituting an integral part thereof, which by way of illustration and not limitation represent the following:

Figure 1 is a schematic representation of a confocal system in accordance with the present invention.

Figure 2 shows a plan view of a sample-holder stage.

Figure 3 is a plan view analogous to figure 2, but wherein a drop has been placed.

## Description of an embodiment of the invention

The present description uses the expression "external coordinate system". By "external coordinate system" we mean a system in which the coordinates x and y (on the horizontal plane) are measured based on a reference that is external to the sample, and which may be used both when measuring the contact angle and when measuring the topography. Each measurement may be made in its own coordinate system, but the position of a point in the measurement area (for example, but not necessarily, its own coordinate origin) is determined in the external coordinate system, thereafter changing the coordinates and expressing all of the data obtained in the external coordinate system.

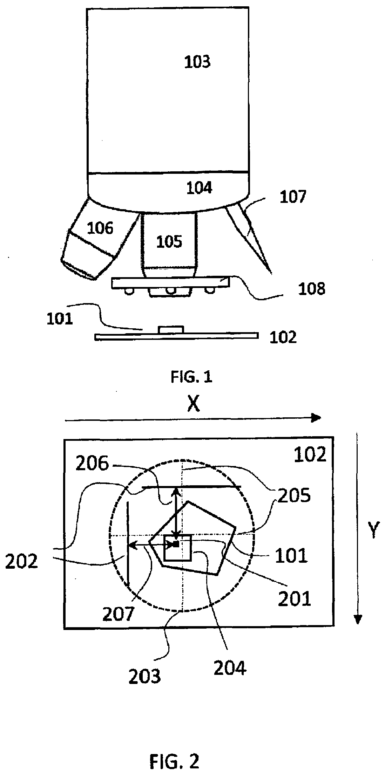

What follows is a detailed explanation of a preferred embodiment of the present invention, illustrated in Figures 1, 2 and 3, wherein the numbers make reference to the elements represented in the figures.

The present description uses the expression "in measurement position" to refer to the position of the objective lenses. By "in measurement position" we mean the situation in which the specific objective lens being referred to is aligned with the optical axis of the confocal microscope and therefore correctly transmits the image of the surface to the image acquisition system of the confocal microscope.

In the present description, "roughness" is taken to mean the collective irregularities of a surface, and is quantified by means of the deviation in the direction of the normal vector of the real surface with respect to the ideal shape it would have. If these deviations are large, the surface is considered to be rough, and, on the other hand, if the deviations are small, the surface is considered to be smooth. Now, depending on the intended use of these surfaces, the roughness classification scales may vary, meaning there is not any specific value to indicate whether a surface should be rough or smooth.

The parameters for referring to roughness as the mean value of roughness $R_a$ or the root mean square $R_q$ or $RMS$ are some of the most common ones when characterizing its profile. This profile can also be characterized by means of the mean value between the highest peak and the lowest trough in each length of sampling $R_z$. As for characterizing the surface in three dimensions, $S_a$ known as the arithmetic mean height of the surface, or Sq, its equivalent in two dimensions, are the most widely used roughness parameters given by the standard deviation. Additional information may be found in references [7], [8] and [9].

Figure 1 shows a confocal device 103, equipped with an image acquisition system and a sample-holder stage 102 with the ability to move on the X and Y axes, said movement being controlled by computer.

The sample 101 whose properties are to be measured is placed on the upper surface of this stage. This confocal device is also equipped with a rotating objective turret 104 that contains at lease one objective lens with a large numerical aperture 105 to project, onto the detector plane of the image acquisition system, the image of the sample, of the placed drop, and of the area of the stage that contains the external reference which will be used to define the external coordinate system.

This rotating objective turret 104 or drum also contains at least one objective lens with a small numerical aperture 106 to measure the topography by confocal microscope, and at least one micro-pipette 107 to place the drops of liquid on the surface of the sample, in order to measure the contact angle.

In this embodiment, the objective lenses are suitably situated in the rotating objective turret to ensure that, once they are in the measurement position, their axes will be aligned with the optical axis of the system.

The micro-pipette 107 includes at least one tank that contains the liquid to be placed, and a mechanism to let just one drop of liquid out at a time, with a very accurately known volume.

In this embodiment, which enables the topography and the surface energy to be measured, and the presence of incrustations of biological origin to be estimated, the objective lens with a large numerical aperture is surrounded by a ring of LEDs 108, which emit in the wavelength range of 300-450 nm, and which will be used as a source of illumination for the fluorescence measurements.

In addition, inserted in the optical path that runs from the objective lenses to the data acquisition system, there is a bandpass filter that only lets through light with wavelengths comprised between 600 and 750 nm.

Figure 2 shows, in accordance with this preferred embodiment, a plan view of a computer-controlled sample-holder stage 102, in which two reference lines 202 have been engraved, which are aligned with the X and Y movement axes of the stage.

The sample 101 is placed so that both it and at least part of both references are included simultaneously within the field of view of the objective lens with a high numerical aperture 203. Once the measurement area 204 has been selected over the surface of the sample, the image of the sample and the stage, acquired by the image acquisition system of the confocal microscope through the objective lens with a high numerical aperture, is analyzed, and the X 206 and Y 207 coordinates are determined in the external coordinate system of any point 201 included within the measurement area.

Afterwards, the sample-holder stage carries out the appropriate movements on the X and Y axes, such that the measurement area is situated on the optical axis of the confocal system 205.

Next, the rotating objective turret 104 is turned until the objective lens with a low numerical aperture 106 is in measurement position, thereafter proceeding to carry out the topographical measurement by confocal microscopy.

Following the topographical measurement, the XY coordinates of each measured point are converted into an external coordinate system, and a file is generated with the topographical data expressed in this coordinate system.

Next, the objective lens with a high numerical aperture 105 is put in measurement position by turning the rotating objective turret to the correct position. At this point the ring of LEDs 108 is activated to illuminate the sample, and the image of the sample illuminated with the image acquisition device of the confocal microscope is obtained, through a bandpass filter in the range of 600-750 nm. Afterwards, the image obtained is analyzed to detect the presence of surface luminescence caused by the presence of incrustations of biological origin.

After carrying out the detection of the presence of incrustations of biological origin, one chooses the zone within the measurement area 204 where one wishes to place the drop to measure the contact angle. Preferably, the micro-pipette 107 is placed in a position perpendicular to the sample by turning the rotating objective turret 104.

Simultaneously, the sample-holder stage 102 carries out the appropriate movements on the X and Y-axes, such that the zone of the measurement area where one wishes to place the drop of water is situated beneath the micro-pipette. Then a mechanism is actuated to place a single drop of liquid 301 on the surface of the sample 101.

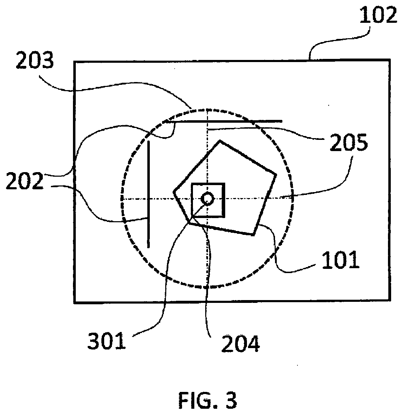

Figure 3 shows a plan view of the sample-holder stage 102 with the drop 301 already placed on the surface of the sample 101, within the area in which the topography has been measured 204.

Once the drop 301 has been placed, the rotating objective turret 104 is again turned until the objective lens with a high numerical aperture 105 is in measurement position. An image is then obtained with the image acquisition system of the confocal microscope and, through image analysis, the XY position of the apex of the drop is calculated in the external coordinate system.

The rotating objective turret 104 is again turned until the objective lens with a low numerical aperture 106 is in measurement position. In this position the relevant measurements are taken to measure the right drop characteristics in order to be able to calculate the contact angle it forms with the surface.

Without losing their general nature, these drop characteristics may be included among the following: maximum drop height, apparent drop diameter, coordinates of a series of points on the surface of the drop... Once this data has been obtained, a suitable mathematical calculation is made, enabling the contact angle to be obtained based on these data, and, optionally, on the volume of the drop.

Finally, the surface energy is calculated. The calculation uses as input data the calculated contact angle, the topographic data of the surface obtained via the measurement carried out by the confocal microscope, the coordinates of the geometric center of the drop and the apparent diameter of the drop.

Initially, the analysis software assesses which model to use in order to describe the wetting phenomenon.

**Determining the surface energy of the solid, based on the topographical data of the subset and the contact angle of the drop.**

Regarding step h, the mathematical model used can be any one from a list of different mathematical models that include, for example, Wenzel's model or Cassie and Baxter's model, among others. The decision as to which one is the most suitable may be made, for example, based on whether the contact angle is less than or greater than 90°, or based on the total roughness or smoothness of the sample, or on the type of roughness exhibited.

As an alternative, the decision may be taken by the user.

h1) Wenzel's model

It is used for homogeneous surfaces characterized by the roughness factor r defined as the ratio between the real area of the surface of the solid and its projection, i.e. $r = A_{rough}/A_{smooth}$. Entering the roughness factor r in Young's equation (1):

$$\cos\theta_W = r \cdot \cos\theta_Y$$

Where $\theta_Y$ is Young's angle and $\theta_W$ is the measured contact angle.

Therefore, the surface energy is calculated by means of the following expression:

$$\gamma_{sl} = \frac{r\,\gamma_s - \gamma_l \cos\theta_W}{r}$$

h2) Cassie-Baxter model

It is used for heterogeneous surfaces and assesses how the contact angle varies when various materials are involved. When the surface is made up of "n" different types of materials, each one characterized by its own energies/tensions, i.e. $\gamma_{ig1}$ and $\gamma_{iR}$, which take up a fraction f of the total surface of the solid with $f_1 + f_2 + \cdots + f_n = 1$, Young's equation becomes:

$$\cos\theta_{CB} = \sum_i^n \frac{f_i(\gamma_{i_s} - \gamma_{i_{sl}})}{\gamma_l} = \sum_i^n f_i \cdot \cos\theta_{i_Y}$$

If the surface morphology causes pockets of air to remain between the liquid and the surface, this gives rise to what is known as the lotus effect, and its fractions would be $f_s$ and $f_v$, respectively. If this fact is combined with roughness factor r, Young's equation would yield:

$$\cos\theta_{CB} = rf_s \cos\theta_Y - f_v$$

Additional information may be found in [4] and [5].

After choosing which model to apply, the analysis software calculates, using the coordinates of the geometrical center of the drop and the apparent diameter of the drop, the coordinates of the contact surface between the drop and the surface of the sample.

Once this has been done, the analysis software uses the topographical data for said contact surface to calculate the surface parameters needed in order to be able to apply the chosen mathematical model, which may or may not be one of the ones included in the following list: Wenzel roughness factor, total solid surface, projected solid surface, fraction of the solid surface, etc.

Once the parameter(s) have been calculated, the analysis software solves the corresponding equation that relates surface energy to said topographical parameters, to the value of the surface tension of the liquid, and to the contact angle. The surface energy of the material is thereby obtained.

In one example of the present invention, two different drops may be used, from two different liquids with different wetting properties. For example, one drop may have mainly polar characteristics, while the other one's characteristics may be mainly dispersive. By repeating the entire process with the two types of drop, it is possible to obtain the polar and dispersive part of the surface energy of the material.

In this text, the word "comprises" and variants thereof (such as "comprising", etc.) should not be understood in an exclusive sense, i.e. they do not exclude the possibility of that which is described including other elements, steps, etc.

Also, the invention is not limited to the specific embodiments described herein, but rather encompasses the variations that one skilled in the art could make (e.g. in terms of choice of materials, dimensions, components, design, etc.), within the scope of what may be deduced from the claims.

References

[1] Whyman, G., Bormashenko, E. and Stein, T. (2008) The rigorous derivation of Young, Cassie-Baxter and Wenzel equations and the analysis of the contact angle hysteresis phenomenon. Chemical Physics Letters. 450, 355-359.

[2] Nakae, H., Inui, R., Hirata, Y. and Saito, H. (1998) Effects of surface roughness on wettability. Acta Mater. 46 (7), 2313-2318.

[3] Calvimontes, A. (2014). A thermodynamic approach to predict apparent contact angles on microstructures using surface polygonal maps. Soft Matter. 10, 8308-8323.

[4] S. Banerjee, (2008) Simple derivation of Young, Wenzel and Cassie-Baxter equations and its interpretations. https://arxiv.org/pdf/0808.1460.pdf

[5] Attension. Influence of Surface roughness on contact angle and wettability. http://www.biolinscientific.com/zafepress.php?url=%2Fpdf%2FAttension%2FTheory%2 0Notes%2FAT_TN_7_roughness.pdf

[6] http://www.biolinscientific.com/product/theta-topography.

[7] http://www.mitsubishicarbide.net/contents/mhg/enuk/html/product/technical informat ion/information/hyoumenarasa.html

[8] http://www.mfg.mtu.edu/cyberman/quality/sfinish/terminology.html

[9] http://www.engineersedge.com/surface finish.htm

**Claims**

1. A method for measuring the topography and surface energy of a surface of a solid sample (101) by confocal microscope, comprising the steps consisting of:

a) positioning the sample (101) on a sample-holder stage (102) of a confocal device (103);
b) determining a measurement area (204) in the sample (101);
c) determining the topography of the measurement area (204) by means of confocal microscopy;
d) placing a drop (301) in the measurement area (204);
e) determining the contact angle $\vartheta$ of the drop (301);
f) determining the coordinates of the edges of the contact surface between the drop (301) and the sample (101);
g) selecting from the subset of the topography corresponding to the edges of the contact surface between the drop (301) and the sample (101);
h) determining the surface energy of the solid ($\gamma_s$), based on the topographical data of the subset and the contact angle of the drop (301).

2. The method according to claim 1, wherein a common reference is used for the topography of the measurement area (204) and for the determination of the coordinates of the edges of the contact surface between the drop (301) and the sample (101).

3. The method according to any of the preceding claims, wherein the sample (101) is put in a zone provided with two reference axes (202) of the sample-holder stage (102), wherein the coordinates of a point (201) of the measurement area (204) are determined by using the reference axes (202) such that for the topography of the measurement area (204) and for the determination of the coordinates of the edges of the contact surface between the drop (301) and the sample (101) the reference defined by the determined point (201) and the reference axes (202) is used.

4. The method according to any of the preceding claims, wherein in order to carry out step e) the maximum height of the drop (301), the apparent diameter of the drop (301) and/or the coordinates of a series of points on the surface of the drop (301) are measured.

5. The method according to any of the preceding claims, wherein step h) is determined using a Wenzel model or a Cassie-Baxter model.

6. The method according to any of the preceding claims, wherein step g) includes the measurement of the Wenzel roughness factor, the total solid surface, the projected solid surface and/or the fraction of the solid surface.

7. The method according to any of the preceding claims, wherein the drop (301) placed in step d) has a known volume.

8. The method according to any of the preceding claims, wherein steps c), d) and f) are carried out with objective lenses and a pipette arranged on a common rotary drum.

9. The method according to any of the preceding claims, comprising between steps d) and e) a step of detecting the presence of incrustations of biological origin in the sample (101).

10. The method according to claim 9, wherein the step of detecting is carried out by fluorescence.

11. The method according to claim 10, wherein the sample is illuminated with light whose wavelength is within the interval that goes from 300 to 450 nm and wherein the light coming from the sample (101) is filtered with a bandpass filter whose transmission is comprised within the interval from 600 to 750 nm.

12. A confocal device (103) for carrying out a method for measuring the topography and contact angle of a solid sample (101) for the purpose of calculating the surface energy, comprising:

a) an image acquisition system enabling the capture of Images of the surface of the sample through the objective lens(es) of the microscope;
b) a sample-holder stage provided with at least one reference point marked by any means, in order to be able to establish an external coordinate system to which all the measurements can be referenced;
c) a system allowing the relative position between the sample and the confocal microscope to be changed;
d) any system enabling the external reference and a specific point of the measurement zone to be located simultaneously, in order to be able to calculate the coordinates of said specific point of the measurement in the external coordinate system.

13. The device according to claim 12, comprising, in order to assess the presence of incrustations of biological origin in the sample:

e) a light source with emissions in the wavelength range of 300-450 nm, to illuminate the sample;

f) a bandpass filter with transmissions included in the range of 600-750 nm, positioned at any point of the optical path that goes from the sample to the image acquisition system, and which filters the light, eliminating all contributions that do not come from the fluorescence of the incrustations of biological origin in the sample.

**14.** The device according to claim 12 or 13, comprising means for placing a drop (301) with a controlled volume and/or means for measuring the volume of the placed drop (301).

**15.** The device according to claim 12, comprising a light source with emissions in the wavelength range of 300-450 nm, to illuminate the sample, and a bandpass filter with transmissions included in the range of 600-750 nm, positioned at any point of the optical path that goes from the sample to the image acquisition system, and which filters the light, eliminating all contributions that do not come from the fluorescence of the incrustations of biological origin in the sample.

**16.** The device according to any of the claims 12 to 14, comprising means for moving the sample-holder (102).

FIG. 1

FIG. 2

FIG. 3

**EP 3 282 224 A1**

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | JP H08 50088 A (TOYOTA MOTOR CORP) 20 February 1996 (1996-02-20) * abstract; figures 1,2 * | 1-11 | INV. G01B11/30 G01B9/04 G01B11/24 G01N13/02 |
| A | SUNDBERG ET AL: "Contact angle measurements by confocal microscopy for non-destructive microscale surface characterization", ANALYTICAL SCIENCES, THE JAPAN SOCIETY FOR ANALYTICAL CHEMISTRY, US, vol. 313, no. 2, 31 July 2007 (2007-07-31) , pages 454-460, XP022182061, ISSN: 0021-9797, DOI: 10.1016/J.JCIS.2007.04.067 * 2. Materials and methods; pages 455-458 * | 1-11 | |
| A | DE 10 2010 015428 A1 (WITEC WISSENSCHAFTLICHE INSTR UND TECHNOLOGIE GMBH [DE]) 20 October 2011 (2011-10-20) * paragraphs [0050] - [0068]; figures 1-2 * | 1-11 | |
| A,D | WHYMAN ET AL: "The rigorous derivation of Young, Cassie-Baxter and Wenzel equations and the analysis of the contact angle hysteresis phenomenon", CHEMICAL PHYSICS LETTERS, ELSEVIER BV, NL, vol. 450, no. 4-6, 19 November 2007 (2007-11-19), pages 355-359, XP022406336, ISSN: 0009-2614, DOI: 10.1016/J.CPLETT.2007.11.033 * 3. The Cassie-Baxter and Wenzel equations; pages 356-357 * | 1-11 | |

TECHNICAL FIELDS SEARCHED (IPC)

G01B
G01N
G02B

-/--

The present search report has been drawn up for all claims

| Place of search | Date of completion of the search | Examiner |
|---|---|---|
| Munich | 15 February 2017 | Trique, Michael |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 796 917 A1 (BADEN WÜRTTEMBERG STIFTUNG GGMBH [DE]) 29 October 2014 (2014-10-29) * paragraphs [0019] - [0021] * * paragraphs [0069] - [0081], [0090]; figures 1-4 * * claims 15-17 * | 12-16 | |
| X | US 2014/143912 A1 (UKRAINTSEV VLADIMIR A [US] ET AL) 22 May 2014 (2014-05-22) * paragraphs [0017] - [0019]; figure 1 * | 12,16 | |

TECHNICAL FIELDS
SEARCHED        (IPC)

The present search report has been drawn up for all claims

| Place of search | Date of completion of the search | Examiner |
|---|---|---|
| Munich | 15 February 2017 | Trique, Michael |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**EP 3 282 224 A1**

## ANNEX TO THE EUROPEAN SEARCH REPORT
## ON EUROPEAN PATENT APPLICATION NO.

EP 16 00 1763

15-02-2017

| Patent document cited in search report | | Publication date | Patent family member(s) | | Publication date |
|---|---|---|---|---|---|
| JP H0850088 | A | 20-02-1996 | NONE | | |
| DE 102010015428 | A1 | 20-10-2011 | NONE | | |
| EP 2796917 | A1 | 29-10-2014 | EP | 2796917 A1 | 29-10-2014 |
| | | | EP | 2941663 A1 | 11-11-2015 |
| | | | WO | 2014173547 A1 | 30-10-2014 |
| US 2014143912 | A1 | 22-05-2014 | DE | 112013005537 T5 | 30-07-2015 |
| | | | JP | 2015537217 A | 24-12-2015 |
| | | | TW | 201428281 A | 16-07-2014 |
| | | | US | 2014143912 A1 | 22-05-2014 |
| | | | US | 2015301078 A1 | 22-10-2015 |
| | | | WO | 2014081888 A1 | 30-05-2014 |

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2899528 A
- US 4688938 A
- US 5137352 A
- US 6867854 B
- US 5861946 A
- US 5080484 A
- WO 2014194235 A
- JP 2005337781 B
- PL 406322
- CA 2923340 A1
- WO 2015036397 A1

- EP 2982438 A1
- WO 2014184865 A
- US 20160082430 A1
- US 9296603 B1
- US 20160075499 A
- US 20160138953 A1
- WO 2016072673 A1
- US 201613663 B
- US 2016136361 A
- DE 1472289 A1

**Non-patent literature cited in the description**

- **WHYMAN, G. ; BORMASHENKO, E. ; STEIN, T.** The rigorous derivation of Young, Cassie-Baxter and Wenzel equations and the analysis of the contact angle hysteresis phenomenon. *Chemical Physics Letters,* 2008, vol. 450, 355-359
- **NAKAE, H. ; INUI, R. ; HIRATA, Y. ; SAITO, H.** Effects of surface roughness on wettability. *Acta Mater,* 1998, vol. 46 (7), 2313-2318
- **CALVIMONTES, A.** A thermodynamic approach to predict apparent contact angles on microstructures using surface polygonal maps. *Soft Matter,* 2014, vol. 10, 8308-8323

- **S. BANERJEE.** Wenzel and Cassie-Baxter equations and its interpretations. *Simple derivation of Young,* 2008, https://arxiv.org/pdf/0808.1460.pdf
- *Attension. Influence of Surface roughness on contact angle and wettability,* http://www.biolinscientific.com/zafepress.php?url=%2Fpdf%2FAttension%2FTheory%2 0Notes%2FAT_TN_7_roughness.pdf